# EUROPÄISCHE PATENTSCHRIFT

(11) **EP 1 664 203 B1**
(45) Veröffentlichungstag und Bekanntmachung des Hinweises auf die Patenterteilung: **19.11.2008**
(21) Anmeldenummer: 04764228.5
(22) Anmeldetag: 18.08.2004
(51) Int. Cl.: C09B 67/22, C09C 1/00

(54) **PIGMENTZUSAMMENSETZUNGEN AUS ORGANISCHEN UND ANORGANISCHEN PIGMENTEN**
PIGMENT COMPOSITIONS CONSISTING OF ORGANIC AND INORGANIC PIGMENTS
COMPOSITIONS PIGMENTAIRES CONTENANT DES PIGMENTS ORGANIQUES ET DES PIGMENTS INORGANIQUES

(30) Priorität: 12.09.2003 DE 10342601
(43) Veröffentlichungstag der Anmeldung: 07.06.2006
(73) Patentinhaber: Clariant Produkte (Deutschland) GmbH, 65929 Frankfurt am Main (DE)
(72) Erfinder: WEBER, Joachim, CH-4153 Reinach (DE); WILKER, Gerhard, 64546 Mörfelden-Walldorf (DE)
(74) Vertreter: Hütter, Klaus
(86) Internationale Anmeldenummer: PCT/EP2004/009241
(87) Internationale Veröffentlichungsnummer: WO 2005/028564

(56) Entgegenhaltungen:
- EP-A- 0 651 029
- EP-A- 0 816 440
- EP-A- 0 985 712
- WO-A-02/055610
- DE-A- 3 617 010
- DATABASE WPI Section Ch, Week 199725 Derwent Publications Ltd., London, GB; Class E21, AN 1997-276819 XP002303587 & JP 09 100420 A (DAINIPPON INK & CHEM INC) 15. April 1997 (1997-04-15)
- DATABASE WPI Section Ch, Week 199604 Derwent Publications Ltd., London, GB; Class E23, AN 1996-036023 XP002303588 & JP 07 304985 A (DAINIPPON INK & CHEM INC) 21. November 1995 (1995-11-21)
- DATABASE WPI Section Ch, Week 199225 Derwent Publications Ltd., London, GB; Class G01, AN 1992-203858 XP002303589 & JP 04 132770 A (DAINIPPON INK & CHEM KK) 7. Mai 1992 (1992-05-07)

## Beschreibung

Die Erfindung betrifft Pigmentzusammensetzungen aus organischen Gelbpigmenten mit anorganischen Pigmenten und ihre Verwendung zum Färben von hochmolekularen Materialien.

Beim Einsatz von Pigmenten zum Färben von hochmolekularen organischen Materialien werden hohe Anforderungen an die anwendungstechnischen Eigenschaften der Pigmente gestellt, wie leichte Dispergierbarkeit, anwendungsgerechte Fließfähigkeit der Lacke, hohe Farbstärke, Überlackierechtheit, Lösemittelechtheit, Beständigkeit gegen Alkali und Säure, Licht- und Wetterechtheiten und Reinheit des Farbtons. Außerdem ist eine möglichst universelle Einsetzbarkeit zum Färben von anderen hochmolekularen Systemen, wie beispielsweise von Kunststoffen und Druckfarben, wünschenswert. Hier kommen weitere teilweise auch an Lacke gestellte Anforderungen hinzu, wie beispielsweise hohe Echtheiten wie Ausblutechtheit und Temperaturechtheiten. Bei Lacken und Druckfarben wird die Einsetzbarkeit sowohl in wasser- als auch in lösemittelbasierenden Systemen gewünscht. Der Trend bei der Herstellung von Pigmentsuspensionen geht hin zu hohen Pigmentkonzentrationen, daher werden hochpigmentierte Lack- und Druckfarbenkonzentrate oder Mahlgüter (mill base) mit dennoch niedriger Viskosität gefordert.

Anorganische Pigmente zeichnen sich oft durch hohes Deckvermögen aus. Allerdings genügen sie beispielsweise bezüglich Farbstärke oder Farbtonreinheit meist nicht den aufgezählten Anforderungen.

Die EP-A-816 440 offenbart Mischungen aus C.I. Pigment Yellow 184 mit verschiedenen organischen Pigmenten.

Die EP-A-985 712 offenbart Mischungen aus einer Vielzahl von anorganischen Pigmenten mit einer Vielzahl von organischen Pigmenten in Granulatform.

Die WO 02/055610 offenbart Mischungen aus organischen, gelben Benzimidazolonpigmenten mit gelbem Nickeltitanat. Auch diese Mischungen genügen in manchen Punkten nicht den Anforderungen.

Es bestand ein Bedarf an Pigmentzusammensetzungen, die Nachteile bekannter Pigmentzusammensetzungen überwinden und die den oben genannten Anforderungen genügen.

Gegenstand der Erfindung sind Pigmentzusammensetzungen, enthaltend ein oder mehrere, z.B. ein, zwei oder drei, organische Gelbpigmente aus der Gruppe C.I. Pigment Yellow 213, Pigment Yellow 214 und Disazopigment der Formel (I), 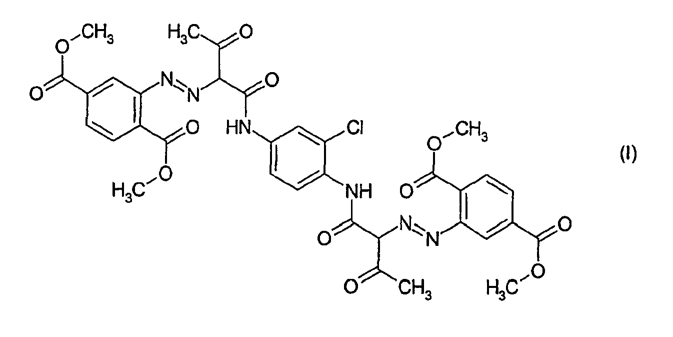 und ein oder mehrere, z.B. ein, zwei oder drei, anorganische Pigmente.

Als anorganische Pigmente kommen Titandioxidpigmente, wie z. B. Pigment White 6, Bismutvanadatpigmente; Bleichromatpigmente, wie beispielsweise C.I. Pigment Yellow 34 oder 104 oder C.I. Pigment Orange 21; Molybdatrot- oder Molybdatorangepigmente, wie beispielsweise C.I. Pigment Red 104; Cersulfidpigmente, wie beispielsweise C.I. Pigment Orange 75 oder C.I. Pigment Red 265; komplexe anorganische Buntpigmente, wie beispielsweise C.I. Pigment Yellow 53, 118, 119, 157, 158, 159, 160, 161, 162, 163, 164 oder 189; C.I. Pigment Brown 24, 33, 34, 35, 37, 39 oder 40, C.I. Pigment Green 50 oder C.I. Pigment Blue 28, 36 oder 72; und Silikatpigmente, wie beispielsweise C.I. Pigment Blue 29, C.I. Pigment Violet 15 oder C.I. Pigment Red 259, in Betracht.

Bevorzugt werden komplexe anorganische Buntpigmente mit gelbem Farbton sowie die ebenfalls gelben Bismutvanadatpigmente eingesetzt.

Bevorzugte komplexe anorganische Buntpigmente mit gelbem Farbton sind solche mit Rutilstruktur, wie Chromtitangelb, wie z.B. C.I. Pigment Brown 24, Chromniobtitanat, wie z.B. C.I. Pigment Yellow 162, Chromwolframtitangelb, wie z.B. C.I. Pigment Yellow 163, Nickeltitangelb, wie z.B. C.I. Pigment Yellow 53, C.I. Pigment Yellow 118 und C.I. Pigment Yellow 161.
Bismutvanadate umfassen auch Bismutvanadat/molybdate, wie z.B. C.I. Pigment Yellow 184.

In den erfindungsgemäßen Pigmentzusammensetzungen ist das anorganische Pigment insbesondere eines der drei anorganischen Pigmente C.I. Pigment Yellow 53, C.I. Pigment Brown 24 oder C.I. Pigment Yellow 184, besonders bevorzugt C.I. Pigment Yellow 184.

In den erfindungsgemäßen Pigmentzusammensetzungen ist das organische Gelbpigment bevorzugt C.I. Pigment Yellow 213 oder das Disazopigment der Formel (I), insbesondere C.I. Pigment Yellow 213.

Besonders bevorzugt sind Pigmentzusammensetzungen, enthaltend C.I. Pigment Yellow 213 und C.I. Pigment Yellow 184.

Die erfindungsgemäßen Pigmentzusammensetzungen sind von besonderem Interesse für den gelben, orangefarbenen, roten, blauen und grünen Farbtonbereich, so dass sie in der Regel Gemische mehrerer Gelbpigmente oder Gemische von Gelbpigmenten mit Orangepigmenten, Rotpigmenten, Grünpigmenten, Braunpigmenten und/oder Blaupigmenten enthalten. Insbesondere sind sie für den gelben Farbtonbereich von Interesse. Vorzugsweise enthalten die erfindungsgemäßen Pigmentzusammensetzungen zwei oder drei verschiedene Pigmente; insbesondere eines der genannten organischen kombiniert mit einem anorganischen Pigment.

In den erfindungsgemäßen Pigmentzusammensetzungen kann das Gewichtsverhältnis organisches Gelbpigment zu anorganischem Pigment 0,1 zu 99,9 bis 99,9 zu 0,1, bevorzugt 1 zu 99 bis 99 zu 1, besonders bevorzugt 5 zu 95 bis 95 zu 5 und insbesondere 10 zu 90 bis 90 zu 10, betragen.

Die erfindungsgemäßen Pigmentzusammensetzungen können auf verschiedene Weise hergestellt werden, beispielsweise durch Mischen der trockenen Komponenten in Granulat- oder Pulverform vor oder nach einer Mahlung oder durch Zugabe der einen Komponente in feuchter oder trockener Form zur anderen Komponente während des Herstellungsprozess der letzteren Komponente, beispielsweise durch Mischen der Komponenten in Form der feuchten Presskuchen. Es bietet sich insbesondere an, das anorganische Pigment während des Herstellprozesses des organischen Gelbpigments zuzugeben. Der Herstellprozess des organischen Gelbpigments umfasst das Diazotieren des zugrundeliegenden aromatischen Amins (Base), ggf. das Lösen der Kupplungskomponente und ggf. ihre Fällung, das Mischen der beiden Reaktionspartner Diazoniumsalz und Kupplungskomponente, wobei die Kupplungskomponente zum Diazoniumsalz oder umgekehrt zugegeben werden kann oder auch eine kontinuierliche Azokupplung durchgeführt werden kann. Des Weiteren kann der Herstellprozess eine Wärmebehandlung der fertigen Kuppelsuspension, ggf. unter Zugabe von Lösemittel und ggf. unter Druck umfassen, die Isolierung des Kuppelprodukts und ggf. eine Nachbehandlung des Kuppelprodukts in einem wässrigen, wässrig-organischen oder organischen Medium unter erhöhter Temperatur, ggf. unter Druck, mit anschließender Isolierung des organischen Gelbpigments als Presskuchen und seine Trocknung und ggf. eine Mahlung eines Granulats zu Pulver. Das anorganische Pigment kann grundsätzlich an einer beliebigen Stelle zugegeben werden, bevorzugt aber zur Suspension des organischen Gelbpigments vor dessen endgültiger Isolierung.

Bei der Trocknung können die bekannten Trockenaggregate zum Einsatz kommen, wie Trockenschränke, Schaufelradtrockner, Taumeltrockner, Kontakttrockner und insbesondere Spinflash- und Sprühtrockner. Durch die Wahl eines geeigneten Trockenaggregates können auch staubarme und rieselfähige Pulver oder Granulate erzeugt werden.

Es ist auch möglich, die Pigmentzusammensetzung erst bei der Einarbeitung in das hochmolekulare organische Medium herzustellen.
Ebenfalls Gegenstand der Erfindung ist daher ein hochmolekulares organisches Medium, enthaltend eine färberisch wirksame Menge eines oder mehrerer organischer Gelbpigmente aus der Gruppe C.I. Pigment Yellow 213, C.I. Pigment Yellow 214 und Disazopigment der Formel (I), und eines oder mehrerer anorganischer Pigmente, vorzugsweise solcher Pigmentmischungen wie bereits vorstehend genannt.

Bei der Herstellung der erfindungsgemäßen Pigmentzusammensetzungen können weitere Farbmittel zum Nuancieren und Hilfsmittel eingesetzt werden, wie beispielsweise Tenside, nichtpigmentäre und pigmentäre Dispergiermittel, Füllstoffe, Stellmittel, Harze, Wachse, Entschäumer, Antistaubmittel, Extender, Antistatika, Konservierungsmittel, Trocknungsverzögerungsmittel, Additive zur Steuerung der Rheologie, Netzmittel, Antioxidantien, UV-Absorber, Lichtstabilisatoren, oder eine Kombination davon. Nuancierkomponenten werden üblicher Weise in Mengen bis zu 10 Gew.-% und Hilfsmittel in Mengen bis zu 40 Gew.-%, jeweils bezogen auf die Gesamtmenge der erfindungsgemäß eingesetzten organischen Gelbpigmente und anorganischen Pigmente, eingesetzt. Es können jedoch in Ausnahmefällen auch höhere Mengen vorkommen.

Mit Füllstoffen bzw. Extender sind eine Vielzahl von Substanzen gemäß DIN 55943 und DIN EN 971-1 gemeint, beispielsweise die verschiedenen Typen von Talk, Kaolin, Glimmer, Dolomit, Kalk oder Bariumsulfat. Dabei hat sich die Zugabe besonders vor einer Mahlung der erfindungsgemäßen Pigmentzusammensetzung bewährt.

Die erfindungsgemäßen Pigmentzusammensetzungen können als vorzugsweise wässriger Presskuchen oder Feuchtgranulat zum Einsatz kommen, in der Regel handelt es sich jedoch um feste Systeme von rieselfähiger, pulverförmiger Beschaffenheit oder um Granulate.

Die erfindungsgemäßen Pigmentzusammensetzungen lassen sich zum Pigmentieren von hochmolekularen organischen Materialien natürlicher oder synthetischer Herkunft einsetzen, beispielsweise von Kunststoffen, Harzen, Lacken, Anstrichfarben, elektrophotographischen Tonern und Entwicklern, Elektretmaterialien, Farbfiltern sowie von Tinten, Druckfarben und Saatgut.

Hochmolekulare organische Materialien, die mit den erfindungsgemäßen Pigmentzusammensetzungen pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.
Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Pigmentzusammensetzungen als Blend oder in Form von Präparationen oder Dispersionen zu benutzen. Bezogen auf das zu pigmentierende, hochmolekulare organische Material setzt man die erfindungsgemäßen Pigmentzusammensetzungen in einer Menge von 0,01 bis 30 Gew.-%, vorzugsweise 0,1 bis 15 Gew.-%, ein.
Es ist in manchen Fällen auch möglich, anstelle einer gemahlenen und/oder gefinishten erfindungsgemäßen Pigmentzusammensetzung ein entsprechendes Crude mit einer BET-Oberfläche von größer als 2 m²/g, bevorzugt größer als 5 m²/g, einzusetzen. Dieser Crude kann zur Herstellung von Farbkonzentraten in flüssiger oder fester Form in Konzentrationen von 5 bis 99 Gew.-%, allein oder gegebenenfalls in Mischung mit anderen Crudes oder Fertigpigmenten, verwendet werden.

Die erfindungsgemäßen Pigmentzusammensetzungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner.
Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen Pigmentzusammensetzungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Pigmentzusammensetzungen als Farbmittel in Ink-Jet Tinten auf wässriger und nichtwässriger Basis sowie in solchen Tinten, die nach dem Hot-melt-Verfahren arbeiten, geeignet. Ink-Jet-Tinten enthalten im allgemeinen insgesamt 0,5 bis 15 Gew.-%, vorzugsweise 1,5 bis 8 Gew.-%, (trocken gerechnet) einer oder mehrerer der erfindungsgemäßen Pigmentzusammensetzungen.
Mikroemulsionstinten basieren auf organischen Lösemitteln, Wasser und ggf. einer zusätzlichen hydrotropen Substanz (Grenzflächenvermittler). Mikroemulsionstinten enthalten im allgemeinen 0,5 bis 15 Gew.-%, vorzugsweise 1,5 bis 8 Gew.-%, einer oder mehrerer der erfindungsgemäßen Pigmentzusammensetzungen, 5 bis 99 Gew.-% Wasser und 0,5 bis 94,5 Gew.-% organisches Lösungsmittel und/oder hydrotrope Verbindung.
"Solvent based" Ink-Jet-Tinten enthalten vorzugsweise 0,5 bis 15 Gew.-% einer oder mehrerer der erfindungsgemäßen Pigmentzusammensetzungen, 85 bis 99,5 Gew.-% organisches Lösungsmittel und/oder hydrotrope Verbindungen. Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im wesentlichen aus 20 bis 90 Gew.-% Wachs und 1 bis 10 Gew.-% einer oder mehrerer der erfindungsgemäßen Pigmentzusammensetzungen. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein.
Weiterhin sind die erfindungsgemäßen Pigmentzusammensetzungen auch als Farbmittel für Farbfilter, sowohl für die additive wie auch für die subtraktive Farberzeugung, sowie als Farbmittel für elektronische Tinten ("electronic inks" bzw. "e-inks") oder "electronic paper" ("e-paper") geeignet.

Die erfindungsgemäßen Pigmentzusammensetzungen zeichnen sich aus durch ihre hervorragenden coloristischen und rheologischen Eigenschaften, insbesondere hohe Flockungsstabilität, leichte Dispergierbarkeit, gute Rheologie und hohe Farbstärke. Sie sind in vielen Anwendungsmedien leicht und bis zu hohen Feinheiten dispergierbar. Solche Pigmentdispersionen zeigen hervorragende rheologische Eigenschaften selbst bei hoher Pigmentierung der Lackfarbenkonzentrate. Auch die anderen oben erwähnten Eigenschaften wie beispielsweise gute Überlackierechtheit, Lösemittelechtheit, Alkaliechtheit, Licht-und Wetterechtheiten und hohe Reinheit des Farbtons sind sehr gut. Außerdem umfassen die erfindungsgemäßen Pigmentzusammensetzungen auch chlorfreie Pigmentzusammensetzungen, die den weiteren Vorteil haben, dass insbesondere bei einer Verbrennung von mit diesen Pigment gefärbten Substraten keine Gefährdung durch chlorierte Abbauprodukten auftritt.

Zur Beurteilung der Eigenschaften der Pigmente auf dem Lacksektor in wasserfreien, lösemittelbasierenden Lacksystemen wurden aus der Vielzahl der bekannten Lacke ein Alkyd-Melaminharz-Lack auf Basis eines mittelöligen Alkydharzes und eines butanolveretherten Melaminharzes (AM) ausgewählt.

Zur Beurteilung der Eigenschaften der Pigmente auf dem Lacksektor in wässrigen Lacksystemen wurde aus der Vielzahl der bekannten Lacksysteme ein wässriger Lack auf Polyurethanbasis (PUR) ausgewählt.

Die Bestimmung der coloristischen Eigenschaften erfolgte nach DIN 55986.
Die Rheologie des Mahlguts nach der Dispergierung (millbase-Rheologie) wurde visuell anhand der folgenden fünfstufigen Skala bewertet.
- 5: dünnflüssig
- 4: flüssig
- 3: dickflüssig
- 2: leicht gestockt
- 1: gestockt

Die Bestimmung der Überlackierechtheit erfolgte nach DIN 53221.
Die Bestimmung der Viskosität erfolgte nach dem Verdünnen des Mahlguts auf die Pigmentendkonzentration mit dem Viskospatel nach Rossmann, Typ 301 der Firma Erichsen.

In den folgenden Beispielen bedeuten Prozentangaben Gewichtsprozente und Teile Gewichtsteile, sofern nicht anders angegeben.

### Beispiel 1

80 Teile P.Y.184 und 20 Teile P.Y.213 werden in ein AM-Lacksystem eingearbeitet. Es werden grünstichig gelbe, deckende Lackierungen mit reinem Farbton erhalten.

### Beispiel 2

27 Teile P.Y.53 und 3 Teile P.Y.213 werden mechanisch innig miteinander vermischt. Im AM-Lack werden mit der Pigmentzusammensetzung farbstarke, grünstichig-gelbe, glänzende und deckende Lackierungen erhalten. Die Rheologie des Mahlguts ist sehr gut und die Viskosität des Volltonlacks niedrig. Die Alkaliechtheit und die Wetterechtheit sind sehr gut.

### Beispiel 3

15 Teile P.Y.53 und 15 Teile P.Y.213 werden mechanisch innig miteinander vermischt. Im PUR-Lack werden mit der Pigmentzusammensetzung farbstarke, grünstichig-gelbe, helle und deckende Lackierungen mit reinem Farbton erhalten. Die Überlackierechtheit ist sehr gut.

### Beispiel 4

12 Teile P.Y.53 und 18 Teile P.Y.213 werden mechanisch innig miteinander vermischt. Im PUR-Lack werden mit der Pigmentzusammensetzung farbstarke, grünstichig-gelbe, helle und deckende Lackierungen mit reinem Farbton erhalten. Die Überlackierechtheit ist sehr gut.

### Beispiel 5

10,5 Teile Aminodimethylterephtalat werden in Wasser und Salzsäure angerührt und mit Natriumnitrit diazotiert. Es werden 100 Teile P.Y.184 zugegeben und mit Natriumacetat pH 4,5 eingestellt. Eine Lösung aus 15,3 Teilen Acetoacetylaminomethoxychinoxalindion in 250 Teilen Wasser und 10 ml Natronlauge wird in ca. 40 min zugegeben. Nach dem Auskuppeln wird die Suspension abgesaugt und der Presskuchen salzfrei gewaschen. Der Presskuchen wird in 600 ml N-Methylpyrrolidon eingetragen, die Supension wird auf 150°C erwärmt und 10 min bei 150°C gerührt. Nach dem Abkühlen wird abgesaugt, mit N-Methylpyrrolidon, dann mit Wasser gewaschen und getrocknet. Es werden 118 Teile Pigmentzusammensetzung, enthaltend P.Y.213 und P.Y.184, erhalten.
Im AM-Lack werden farbstarke, deckende, grünstichig-gelbe Lackierungen mit reinem Farbton und hohem Glanz erhalten. Die Rheologie des Mahlguts ist sehr gut, die Viskosität des Volltonlacks niedrig.

### Beispiel 6

26 Teile P.Y.184 und 4 Teile P.Y.213 werden mechanisch innig miteinander vermischt. Im PUR-Lack werden mit der Pigmentzusammensetzung farbstarke, grünstichig-gelbe, und deckende Lackierungen erhalten. Die Rheologie des Mahlguts ist sehr gut. Die Überlackierechtheit und die Wetterechtheit sind sehr gut.

### Beispiel 7

3 Teile P.Y.184 und 27 Teile P.Y.213 werden mechanisch innig miteinander vermischt. Im AM-Lack werden mit der Pigmentzusammensetzung farbstarke, grünstichig-gelbe, glänzende und deckende Lackierungen von reinem Farbton erhalten. Die Rheologie des Mahlguts ist sehr gut. Die Viskosität des Volltonlacks ist niedrig.

### Beispiel 8

28,5 Teile P.Y.184 und 1,5 Teile P.Y.213 werden mechanisch innig miteinander vermischt. Im AM-Lack werden mit der Pigmentzusammensetzung helle, grünstichig-gelbe, glänzende und deckende Lackierungen von reinem Farbton erhalten. Die Rheologie des Mahlguts ist sehr gut. Die Viskosität des Volltonlacks ist niedrig.

### Beispiel 9

18 Teile P.B.24 und 12 Teile P.Y.213 werden mechanisch innig miteinander vermischt. Im AM-Lack werden mit der Pigmentzusammensetzung helle, gelbe und deckende Lackierungen von reinem Farbton erhalten. Die Rheologie des Mahlguts ist sehr gut. Die Viskosität des Volltonlacks ist niedrig. Die Wetterechtheit ist sehr gut.

### Beispiel 10

24 Teile P.Y.184 und 6 Teile Disazopigment der Formel (I) werden mechanisch innig miteinander vermischt. Im AM-Lack werden mit der Pigmentzusammensetzung farbstarke, grünstichig-gelbe, glänzende und deckende Lackierungen von reinem Farbton erhalten. Die Rheologie des Mahlguts ist sehr gut und die Viskosität des Volltonlacks niedrig. Die Wetterechtheit ist sehr gut.

### Beispiel 11

6 Teile P.Y.184 und 24 Teile Disazopigment der Formel (I) werden mechanisch innig miteinander vermischt. Im AM-Lack werden mit der Pigmentzusammensetzung farbstarke, grünstichig-gelbe, glänzende und deckende Lackierungen von reinem Farbton erhalten. Die Rheologie des Mahlguts ist sehr gut und die Viskosität des Volltonlacks niedrig. Die Wetterechtheit ist sehr gut.

### Beispiel 12

10 Teile P.Y.53 und 10 Teile P.Y.214 werden mechanisch innig miteinander vermischt. Zur Beurteilung der Eigenschaften der Pigmente auf dem Kunststoffgebiet wurde aus der Vielzahl der bekannten Kunststoffe Polyethylen (PE) ausgewählt und Spritzgußformteile hergestellt. Die Temperaturechtheit der Pigmentzusammensetzung ist sehr gut und liegt über 260°C, das deltaE ist bei 260°C kleiner 1,0. Die Farbstärke, Reinheit und Helligkeit des Farbtons sind hoch, der Verzug, das ist die Änderung der Dimensionen des Spritzgußformteils durch Alterung, ist niedrig.

### Beispiel 13

20 Teile P.Y.53 und 2 Teile P.Y.214 werden mechanisch innig miteinander vermischt. Zur Beurteilung der Eigenschaften der Pigmente auf dem Kunststoffgebiet wurde aus der Vielzahl der bekannten Kunststoffe Polyethylen (PE) ausgewählt und Spritzgußformteile hergestellt. Die Temperaturechtheit der Pigmentzusammensetzung ist sehr gut und liegt über 260°C, das deltaE ist bei 260°C kleiner 1,0. Die Farbstärke, Reinheit und Helligkeit des Farbtons sind hoch, der Verzug, das ist die Änderung der Dimensionen des Spritzgußformteils durch Alterung, ist niedrig.

## Patentansprüche

1. Pigmentzusammensetzung, enthaltend ein oder mehrere organische Gelbpigmente aus der Gruppe C.I. Pigment Yellow 213, Pigment Yellow 214 und Disazopigment der Formel (I), 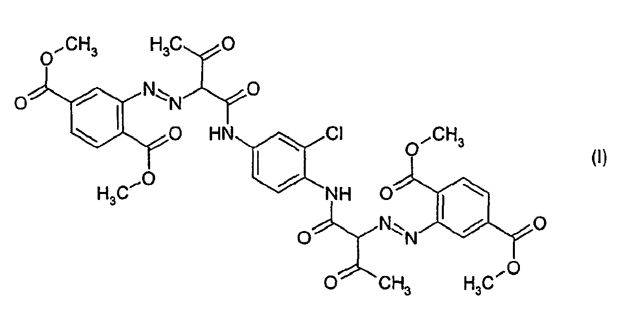 und ein oder mehrere anorganische Pigmente.

2. Pigmentzusammensetzung nach Anspruch 1, **dadurch gekennzeichnet, dass** das anorganische Pigment ein Titandioxidpigment, ein Bismutvanadatpigment, ein Bleichromatpigment, ein Molybdatrotpigment, ein Molybdatorangepigment, ein Cersulfidpigment, ein Silikatpigment oder ei n komplexes anorganisches Buntpigment ist.

3. Pigmentzusammensetzung nach Anspruch 1 oder 2, **dadurch gekennzeichnet, dass** das anorganische Pigment ein Chromtitangelb, ein Chromniobtitanat, ein Chromwolframtitangelb, ein Nickeltitangelb, ein Bismutvanadat, ein Bismutvanadat/molybdat oder eine Kombination davon ist.

4. Pigmentzusammensetzung nach einem oder mehreren der Ansprüche 1 bis 3, **dadurch gekennzeichnet, dass** das anorganische Pigment C.I. Pigment Brown 24, C.I. Pigment Yellow 162, C.I. Pigment Yellow 163, C.I. Pigment Yellow 53, C.I. Pigment Yellow 118, C.I. Pigment Yellow 161, C.I. Pigment Yellow 184 oder eine Kombination davon ist.

5. Pigmentzusammensetzung nach mindestens einem der Ansprüche 1 bis 4, **dadurch gekennzeichnet, dass** das anorganische Pigment C.I. Pigment Yellow 184 und das organische Gelbpigment C.I. Pigment Yellow 213 ist.

6. Pigmentzusammensetzung nach mindestens einem der Ansprüche 1 bis 5, **dadurch gekennzeichnet, dass** das Gewichtsverhältnis organisches Gelbpigment zu anorganischem Pigment 0,1 zu 99,9 bis 99,9 zu 0,1, insbesondere 10 zu 90 bis 90 zu 10, beträgt.

7. Pigmentzusammensetzung nach mindestens einem der Ansprüche 1 bis 6, **dadurch gekennzeichnet, dass** weitere Farbmittel zum Nuancieren sowie Hilfsmittel aus der Gruppe der Tenside, nichtpigmentären und pigmentären Dispergiermittel, Füllstoffe, Stellmittel, Harze, Wachse, Entschäumer, Antistaubmittel, Extender, Konservierungsmittel, Trocknungsverzögerungsmittel, Additive zur Steuerung der Rheologie, Netzmittel, Antioxidantien, UV-Absorber, Lichtstabilisatoren, oder eine Kombination davon, enthalten sind.

8. Verfahren zur Herstellung einer Pigmentzusammensetzung nach mindestens einem der Ansprüche 1 bis 7, durch Mischen der besagten organischen Gelbpigmente mit den besagten anorganischen Pigmenten.

9. Verfahren zur Herstellung einer Pigmentzusammensetzung nach mindestens einem der Ansprüche 1 bis 7, **dadurch gekennzeichnet, dass** das oder die anorganischen Pigmente während eines oder mehrerer der Syntheseschritte des organischen Gelbpigments, umfassend Diazotierung, Lösen der Kupplungskomponente, Fällung der Kupplungskomponente, Azokupplung, Lösemittelbehandlung, Isolierung, zugegeben werden.

10. Verwendung einer Pigmentzusammensetzung nach einem oder mehreren der Ansprüche 1 bis 7, zum Pigmentieren von hochmolekularen organischen Materialien natürlicher oder synthetischer Herkunft, beispielsweise von Kunststoffen, Harzen, Lacken, Anstrichfarben, elektrophotographischen Tonern und Entwicklern, sowie von Elektretmaterialien, Farbfiltern, Tinten, Druckfarben, Ink-Jet-Tinten, elektronischen Tinten und Saatgut.

11. Hochmolekulares organisches Medium, enthaltend eine färberisch wirksame Menge einer Pigmentzusammensetzung nach einem oder mehreren der Ansprüche 1 bis 7.

## Claims

1. A pigment composition comprising one or more organic yellow pigments from the group C.I. Pigment Yellow 213, Pigment Yellow 214 and disazo pigment in the formula (I) 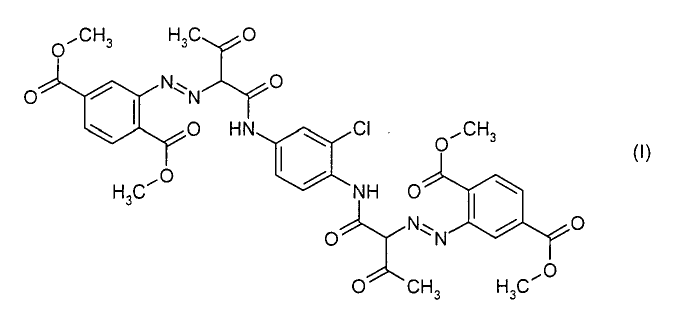 and one or more inorganic pigments.

2. The pigment composition as claimed in claim 1, wherein the inorganic pigment is a titanium dioxide pigment, a bismuth vanadate pigment, a lead chromate pigment, a molybdate red pigment, a molybdate orange pigment, a cerium sulfide pigment, a silicate pigment or a complex inorganic chromatic pigment.

3. The pigment composition as claimed in claim 1 or 2, wherein the inorganic pigment is a chromium titanium yellow, a chromium niobium titanate, a chromium tungsten titanium yellow, a nickel titanium yellow, a bismuth vanadate, a bismuth vanadate/molybdate or a combination thereof.

4. The pigment composition as claimed in one or more of claims 1 to 3, wherein the inorganic pigment is C.I. Pigment Brown 24, C.I. Pigment Yellow 162, C.I. Pigment Yellow 163, C.I. Pigment Yellow 53, C.I. Pigment Yellow 118, C.I. Pigment Yellow 161, C.I. Pigment Yellow 184 or a combination thereof.

5. The pigment composition as claimed in at least one of claims 1 to 4, wherein the inorganic pigment is C.I. Pigment Yellow 184 and the organic yellow pigment is C.I. Pigment Yellow 213.

6. The pigment composition as claimed in at least one of claims 1 to 5, wherein the weight ratio of organic yellow pigment to inorganic pigment is 0.1 : 99.9 to 99.9 : 0.1, in particular 10 : 90 to 90 : 10.

7. The pigment composition as claimed in at least one of claims 1 to 6, comprising further shading colorants, and auxiliaries from the group of surfactants, pigmentary and nonpigmentary dispersants, fillers, standardizers, resins, waxes, defoamers, antidust agents, extenders, preservatives, drying retardants, rheology control additives, wetting agents, antioxidants, UV absorbers, light stabilizers, or a combination thereof.

8. A process for preparing a pigment composition as claimed in at least one of claims 1 to 7 by mixing said organic yellow pigments with said inorganic pigments.

9. A process for preparing a pigment composition as claimed in at least one of claims 1 to 7, which comprises adding the inorganic pigment or pigments during one or more of the synthesis steps of the organic yellow pigment comprising diazotizing, dissolving the coupling component, precipitating the coupling component, azo coupling, solvent treatment, and isolating.

10. The use of a pigment composition as claimed in one or more of claims 1 to 7 for pigmenting high molecular weight organic materials of natural or synthetic origin, such as plastics, resins, varnishes, paints, electrophotographic toners and developers, and also electret materials, color filters, inks, including printing inks, ink-jet inks, and electronic inks, and seed.

11. A high molecular weight organic medium comprising a coloringly effective amount of a pigment composition as claimed in one or more of claims 1 to 7.

## Revendications

1. Composition de pigment, contenant un ou plusieurs pigments jaunes organiques choisis dans l'ensemble constitué par le pigment C.I. Yellow 213, le pigment C.I. Yellow 214 et le pigment disazoïque de formule (I), 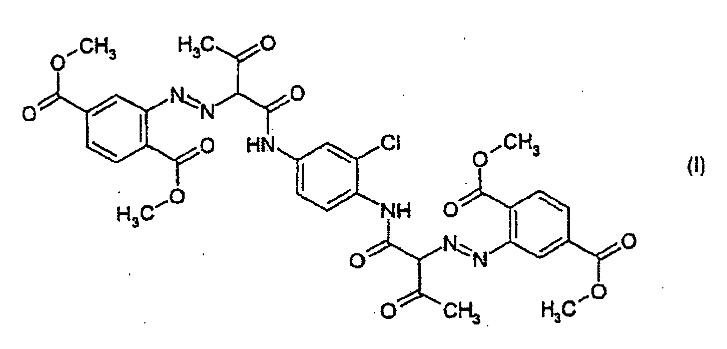 et un ou plusieurs pigments inorganiques.

2. Composition de pigment selon la revendication 1, **caractérisée en ce que** le pigment inorganique est un pigment dioxyde de titane, un pigment vanadate de bismuth, un pigment chromate de plomb, un pigment rouge molybdate, un pigment orangé molybdate, un pigment sulfure de cérium, un pigment silicate ou un pigment coloré inorganique complexe.

3. Composition de pigment selon la revendication 1 ou 2, **caractérisée en ce que** le pigment inorganique est un jaune de titane-chrome, un titanate de niobium-chrome, un jaune de titane-tungstène-chrome, un jaune de titane-nickel, un vanadate de bismuth, un molybdate/vanadate de bismuth ou une association de ceux-ci.

4. Composition de pigment selon une ou plusieurs des revendications 1 à 3, **caractérisée en ce que** le pigment inorganique est le pigment C.I. Brown 24, le pigment C.I. Yellow 162, le pigment C.I. Yellow 163, le pigment C.I. Yellow 53, le pigment C.I. Yellow 118, le pigment C.I. Yellow 161, le pigment C.I. Yellow 184 ou une association de ceux-ci.

5. Composition de pigment selon au moins l'une des revendications 1 à 4, **caractérisée en ce que** le pigment inorganique est le pigment C.I. Yellow 184 et le pigment jaune organique est le pigment C.I. Yellow 213.

6. Composition de pigment selon au moins l'une des revendications 1 à 5, **caractérisée en ce que** le rapport pondéral du pigment organique jaune au pigment inorganique va de 0,1:99,9 à 99,9:0,1, en particulier de 10:90 à 90:10.

7. Composition de pigment selon au moins l'une des revendications 1 à 6, **caractérisée en ce que** sont contenus d'autres agents colorants pour le nuançage ainsi que des adjuvants choisis dans le groupe des tensioactifs, des dispersants pigmentaires et des dispersants non pigmentaires, des charges, des fixateurs, des résines, des cires, des antimousses, des agents anti-poussière, des diluants, des conservateurs, des antisiccatifs, des additifs pour l'ajustement de la rhéologie, des agents mouillants, des antioxydants, des absorbeurs UV, des photostabilisants, ou une association de ceux-ci.

8. Procédé pour la préparation d'une composition de pigment selon au moins l'une des revendications 1 à 7, par mélange desdits pigments jaunes organiques avec lesdits pigments inorganiques.

9. Procédé pour la préparation d'une composition de pigment selon au moins l'une des revendications 1 à 7, **caractérisé en ce qu'**on ajoute le ou les pigments inorganiques au cours d'une ou plusieurs des étapes de synthèse du pigment jaune organique, comprenant la diazotation, la dissolution du copulant, la précipitation du copulant, la copulation azoïque, le traitement par solvant, l'isolement.

10. Utilisation d'une composition de pigment selon une ou plusieurs des revendications 1 à 7, pour la pigmentation de matières organiques de masse moléculaire élevée, d'origine naturelle ou synthétique, par exemple de matières plastiques, de résines, de vernis, de peintures, de toners et développeurs électrophotographiques, ainsi que de matériaux électret, de filtres colorés, d'encres, d'encres d'imprimerie, d'encres pour impression à jet d'encre, d'encres électroniques et de semences.

11. Milieu organique de masse moléculaire élevée, contenant une quantité efficace pour la coloration d'une composition de pigment selon une ou plusieurs des revendications 1 à 7.
